# EUROPEAN PATENT APPLICATION

(11) **EP 1 959 153 A1**
(43) Date of publication of application: **20.08.2008**
(21) Application number: 06823548.0
(22) Date of filing: 01.12.2006
(51) Int. Cl.: F16F 7/00, B60R 19/40, B60R 21/34, B62D 25/10

(54) **SHOCK ABSORBER**

(30) Priority: 06.12.2005 JP 2005352680
(71) Applicant: NHK SPRING CO., LTD., Yokohama-shi, Kanagawa 236-0004 (JP)
(72) Inventor: MATSUBARA, Kousuke, Kanagawa 236-0004 (JP); NAKANO, Ryo, Kanagawa 236-0004 (JP)
(74) Representative: Bohmann, Armin K.
(86) International application number: PCT/JP2006/324069
(87) International publication number: WO 2007/066592

(57) **Abstract**

In an impact absorbing device in which an interior pipe is arranged inside of an exterior pipe having a tapered part, an interior pipe's side wall is provided with holes, a movable body is placed therein, a support part is placed inside of the interior pipe, and an impact absorbing device is comprised. In this device, during impact absorption, the support part excepts a part of a movable body accommodation part, blocks up an inner side opening of a movable body hole of the interior pipe and the movable body can contact with the tapered part, and is placed inside the movable body holes, and at the time of storing of the interior pipe, the movable body is stored in the movable body accommodation part.

## Description

### TECHNICAL FIELD

This invention relates to an impact absorbing device.

### BACKGROUND ART

Conventionally, an automobile is usually equipped with a bumper. The bumper prevents an automobile body from being damaged when the automobile collides. Additionally, an impact absorbing device is recently used on the bumper to upgrade an impact absorption capability (see patent literature 1,2,3,4 and 5). By using the impact absorbing device, further impact to the automobile body can be reduced. In addition, when the automobile collides with a person, the impact to the person is also absorbed by the impact absorbing device. Therefore, serious physical injuries are prevented. The impact absorbing device is also used on an automobile hood (see patent literature 6 and 7). In other words, when the automobile collides with a person, the front of the automobile clashes into the lower half of the person' body, and then the person hits the automobile hood. In such an event, the impact absorbing device lifts the hood. Therefore, space is generated between the hood and the engine. Accordingly, the impact can be cushioned by deforming the hood when the person falls onto the hood.

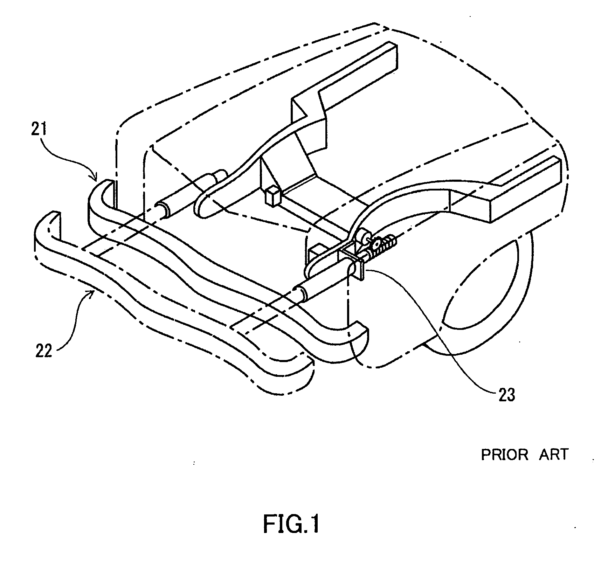

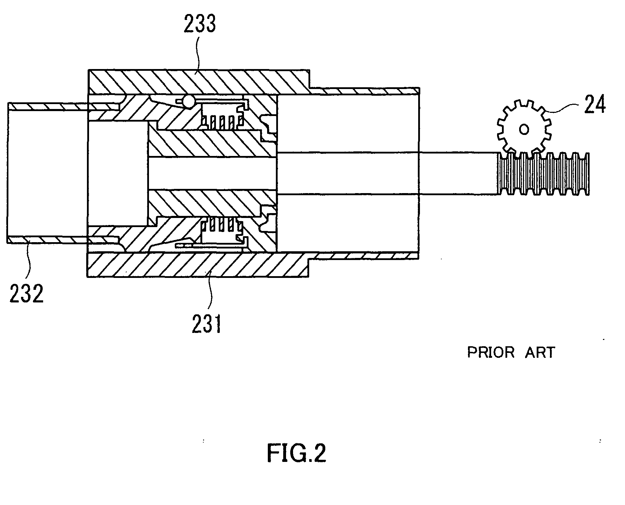

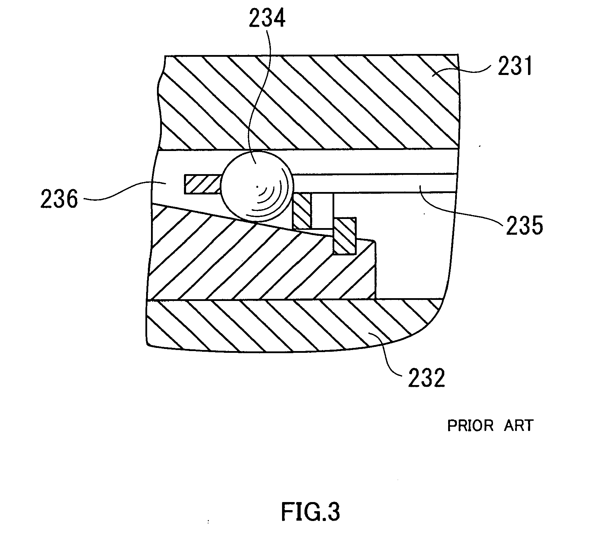

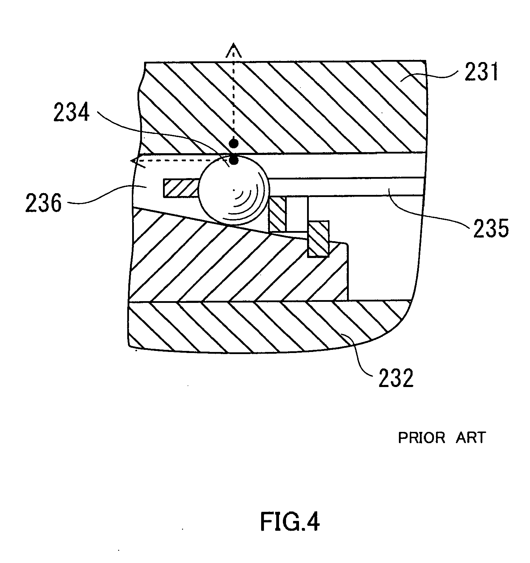

Descriptions are made of one example (patent literature 5) of a conventional impact absorbing device using the drawings below. As shown in Fig.1, this is an example having an impact absorbing device attached to an automobile front bumper. Fig.2 is a part cross-sectional view showing a configuration of the impact absorbing device in this example. As shown in Fig. 2, the impact absorbing device is placed inside an exterior pipe 231, and an interior pipe 232 is in an axially slidable state. The interior pipe 232 is connected to a motor 24 via a support stick. In Fig.2, 233 shows an impact absorbing part. The exterior pipe 231 is fixed to an automobile body. The interior pipe is connected to a bumper. One end of the support stick, which is connected to the motor 24, forms a worm gear. Thereby, a rotational movement of the gear of the motor 24 can be converted into the to-and-fro movement of the support stick. And, as shown by the arrow 21 in Fig.1, a bumper is usually mounted so that it almost contacts the automobile body. However, the interior pipe projects via the support stick by the motor 24, as shown by the arrow 22, when an impact is predicted by sensors for example. Therefore, the bumper is pushed out and forward. Fig.3 and Fig.4 are partial magnified sectional views of the impact absorbing part of Fig.2. Components in Fig.3 and 4 which occur identically in Fig.2 have the same numerals. As shown in both of the drawings, the interior pipe 232 has a tapered part. Between this tapered part and the inner wall of the exterior pipe 231, a wedge-shaped space 236 is formed. A movable body 234 is mounted in the wedge-shaped space 236. The movable body is a hard sphere. The movable body 234 is supported by a movable body support stick. And when the impact is applied to the bumper, the impact is transmitted to the interior pipe 232. Therefore, the impact absorbing part 233 absorbs the impact. As shown in Fig.4, when the interior pipe 232 slides into a storage direction (an automobile body direction) by the impact, the movable body 234 is sandwiched between the wedge-shaped space 236 formed by the tapered part of the interior pipe 232 and the inner wall of the exterior pipe 231. During this process, the sliding of the interior pipe 232 is limited by a frictional force. Additionally, when the impact is applied beyond the limit imposed by the friction force, the interior pipe 232 slides into a storage direction while the movable body 234 deforms a side wall of the exterior pipe. Thereby the impact is absorbed. On the other hand, even if the interior pipe projects and the bumper is pushed out and forward, the impact absorbing device stores the interior pipe 232 within the exterior pipe 231 via the support stick by driving the motor 24 when the impact is not applied. Therefore, the impact absorbing device may return a bumper to an initial position. At which time, the movable body 234 is fixed in a predetermined place by the support stick of the movable body so that it is not sandwiched in the wedge-shaped space 236.
Patent Document No.1: Japanese Patent laid-open H06-644896
Patent Document No.2: Japanese Patent laid-open H11-291845
Patent Document No.3: Japanese Patent laid-open 2000-255350
Patent Document No.4: Japanese Patent laid-open 2001-71786
Patent Document No.5: Japanese Patent laid-open 2002-200949
Patent Document No.6: Japanese Patent laid-open 2004-203250
Patent Document No.7: Japanese Patent laid-open 2004-352134

### DISCLOSURE OF THE INVENTION

### Problems to be Solved by the Invention

However, the impact absorbing device shown in the above example has the following problem. Firstly, the impact absorbing device of the example is a mechanism which absorbs an impact by the frictional force between the movable body 234 and the inner wall of the exterior pipe 231, and by deformation of the side wall of the exterior pipe 231. However, when the coefficient of friction is small, the movable body 234 slips. Therefore, the side wall of the exterior pipe 231 is not deformed. Thus, the impact cannot be absorbed sufficiently. In addition, the impact absorbing device of the example also houses the interior pipe 232 and returns the bumper to an initial position when the impact is not applied to the impact absorbing device. However, this provides the problems of requiring a support such as the movable body support stick 235 so that the movable body 234 is not inserted into the wedge-shaped space 236 and an increasing number of components can cause a complicated configuration .

The present invention is designed with respect to such circumstances and is directed at providing an impact absorbing device having a compact configuration for securely absorbing an impact.

### Means for Solving the Problems

According to one embodiment of the present invention, an impact absorbing device comprising:
an exterior pipe having an inner wall and further having a tapered part and an impact absorption part arranged at a part of the inner wall for absorbing exterior impacts, the exterior pipe being connected to external components;
an interior pipe having one or a plurality of holes, the interior pipe being coaxially arranged inside the exterior pipe, the interior pipe being capable of sliding axially along inside the exterior pipe and being capable of projecting from the exterior pipe;
an interior pipe sliding means for sliding the interior pipe, the interior pipe sliding means being connected to the interior pipe and a bottom of the exterior pipe;
one or a plurality of movable bodies arranged in the one or plurality of holes of the interior pipe respectively, the one or plurality of movable bodies being rigid spheres;
a support part having one or a plurality of movable body accommodation parts for accommodating the one or plurality of movable bodies respectively, the support part being arranged inside the interior pipe; and
a support part sliding means for sliding the support part, the support part sliding means being connected to the support part.

The impact absorbing device of the present invention according to the embodiment may further comprise a lock mechanism, the lock mechanism locking the interior pipe so that the interior pipe is not released, and the lock mechanism may be arranged upon a bottom of the interior pipe.

In the impact absorbing device of the present invention according to the embodiment, the interior pipe sliding means may comprise an elastic body and a wire for the interior pipe, one end of the elastic body for the interior pipe may be connected to a projection direction end of the interior pipe under compression of the elastic body for the interior pipe, and the wire for the interior pipe may be connected to the interior pipe directly or via a component.

In the impact absorbing device of the present invention according to the embodiment, the component may be the lock mechanism.

In the impact absorbing device of the present invention according to the embodiment, the sliding means may comprise an elastic body and a wire for the support part ,one end of the elastic body for the support part may be connected to the support part under compression of the elastic body for the support part, and the wire for the support part may be connected to the support part and serves as the wire for the interior pipe.

In the impact absorbing device of the present invention according to the embodiment, either at least one of the elastic body for the inside pipe or the elastic body for the support part may be a spring.

The impact absorbing device of the present invention according to the embodiment may further comprise a motor unit for pushing and pulling the wire for the support part, and the motor unit may be connected to the wire for the support part.

In the impact absorbing device of the present invention according to the embodiment, the elastic body for the interior pipe and the elastic body for the support part may be arranged inside the interior pipe.

In the impact absorbing device of the present invention according to the embodiment, the exterior pipe may be made of materials having elastic characteristics.

The impact absorbing device of the present invention according to the embodiment may have an odd number of movable bodies and holes.

In the impact absorbing device of the present invention according to the embodiment, the interior pipe may have a disk-shaped projection facing outwards in an upper end of the interior pipe, the exterior pipe may have a disk-shaped projection facing outwards in a bottom end of the exterior pipe, and the support part may have a disk-shaped projection facing inwards in an upper end of the support part.

In the impact absorbing device of the present invention according to the embodiment, the elastic body for the interior pipe may be arranged outside the exterior pipe.

In the impact absorbing device of the present invention according to the embodiment, the exterior pipe may be made of materials having elastic characteristics.

The impact absorbing device of the present invention according to the embodiment may have an odd number of movable bodies and of holes.

According to one embodiment of the present invention, an impact absorbing device comprising:
an exterior pipe having an inner wall and further having a tapered part and an impact absorption part arranged at a part of the inner wall for absorbing exterior impacts , the exterior pipe being connected to external components;
an interior pipe having one or a plurality of holes, the interior pipe being coaxially arranged inside the exterior pipe, the interior pipe being capable of sliding axially along inside the exterior pipe and being capable of projecting from the exterior pipe;
an interior pipe sliding means for sliding the interior pipe, the interior pipe sliding means being connected to the interior pipe and a bottom of the exterior pipe;
one or a plurality of movable bodies arranged in the one or the plurality of holes of the interior pipe respectively, the one or the plurality of movable bodies being rigid spheres;
a support part having one or a plurality of movable body accommodation parts for accommodating the one or the plurality of movable bodies respectively, the support part being arranged inside the interior pipe;
a pressing component for pushing and sliding the support part, said pressing component being arranged inside the interior pipe; and
a support part sliding means for sliding the support part, the support part sliding means being connected to the support part.

The impact absorbing device of the present invention according to the embodiment may further comprise a lock mechanism, the lock mechanism locking the interior pipe so that the interior pipe is not released, and the lock mechanism may be arranged upon a bottom of the interior pipe.

In the impact absorbing device of the present invention according to the embodiment, the interior pipe sliding means may comprise an elastic body and a wire for the interior pipe, one end of the elastic body for the interior pipe may be connected to a projection direction end of the interior pipe under compression of the elastic body for the interior pipe, and the wire for the interior pipe may be connected to the interior pipe directly or via a component.

In the impact absorbing device of the present invention according to the one embodiment, the component may be the lock mechanism.

In the impact absorbing device of the present invention according to the one embodiment, the support part sliding means may comprise an elastic body and a wire for the support part, one end of the elastic body for the support part may be connected to the support part under compression of the elastic body for the support part, and the wire for the support part may be connected to the support part and serves as the wire for the interior pipe.

In the impact absorbing device of the present invention according to the embodiment, the wire for the support part may move the support part through the pressing component.

In the impact absorbing device of the present invention according to the embodiment, either at least one of the elastic body for the interior pipe or the elastic body for the support part may be a spring.

The impact absorbing device of the present invention according to the embodiment further comprise a motor unit for pushing and pulling the wire for the support part, and the motor unit may be connected to the wire for the support part.

In the impact absorbing device of the present invention according to the embodiment, the exterior pipe may be made of materials having elastic characteristics.

The impact absorbing device of the present invention according to the embodiment may have an odd number of movable bodies and holes.

According to one embodiment of the present invention, an impact absorbing device comprising:
an exterior pipe connected to external components;
an interior pipe having one or a plurality of holes, the interior pipe being coaxially arranged inside the exterior pipe, the interior pipe being capable of sliding axially along inside the exterior pipe and being capable of projecting from the exterior pipe;
an interior pipe sliding means for sliding the interior pipe, the interior pipe sliding means being connected to the interior pipe at a bottom of the exterior pipe;
a central pipe having an inner wall and further having a tapered part, the tip of the tapered part having an opening edge being formed so that it tapers off towards a direction of an opening, and an impact absorbing part arranged at a part of the inner wall for absorbing external impacts, the central pipe being arranged between the exterior pipe and the interior pipe;
one or a plurality of movable bodies arranged in the one or the plurality of holes of the interior pipe respectively, the one or the plurality of movable bodies being rigid spheres;
a support part having one or a plurality of movable body accommodation parts for accommodating the one or the plurality of movable bodies respectively, the support part being arranged inside the interior pipe; and
a support part sliding means for sliding the support part, the support part sliding means being connected to the support part.

The impact absorbing device of the present invention according to the embodiment may further comprise a lock mechanism, the lock mechanism locking the interior pipe so that the interior pipe is not released, and the lock mechanism may be arranged upon a bottom of the interior pipe.

In the impact absorbing device according to the present invention, the interior pipe sliding means may comprise an elastic body and a wire for the interior pipe, one end of the elastic body for the inside pipe may be connected to a projection direction end of the interior pipe under compression of the elastic body for the interior pipe, and the wire for the interior pipe may be connected to the interior pipe directly or via a component.

In the impact absorbing device of the present invention according to the embodiment, the component may be the lock mechanism.

In the impact absorbing device of the present invention according to the embodiment, the support part sliding means may comprise an elastic body and a wire for the support part, one end of the elastic body for the support part may be connected to the support part under compression of the elastic body for the support part, and the wire for the support part may be connected to the support part and serves as the wire for the interior pipe.

In the impact absorbing device of the present invention according to the embodiment, either at least one of the elastic body for the interior pipe or the elastic body for the support part may be a spring.

The impact absorbing device of the present invention according to the embodiment may further comprise a motor unit for pushing and pulling the wire for the support part, and the motor unit may be connected to the wire for the support part.

In the impact absorbing device of the present invention according to the embodiment, the central pipe may be made of materials having elastic characteristics.

The impact absorbing device of the present invention according to the embodiment may have an odd number of movable bodies and holes.

According to one embodiment of the present invention, an impact absorbing device comprising:
an exterior pipe having an inner wall and further having a tapered part and an impact absorption part arranged at a part of the inner wall for absorbing external impacts, the exterior pipe being connected to external components;
a plurality of interior pipes having one or a plurality of holes respectively, the plurality of interior pipes being coaxially arranged inside the exterior pipe; the plurality of interior pipes having a different external diameter and a different internal diameter respectively, and the plurality of interior pipes being capable of sliding axially along inside the exterior pipe and being capable of projecting from said exterior pipe;
an interior pipe sliding means for sliding the plurality of interior pipes, the interior pipe sliding means being connected to the interior pipe arranged innermost and a bottom of the exterior pipe;
a plurality of movable bodies arranged in the one or the plurality of holes of the interior pipe respectively, the plurality of movable bodies being rigid spheres;
a plurality of support parts having one or a plurality of movable body accommodation parts for accommodating a corresponding movable body of the plurality of movable bodies respectively, each of the plurality of support parts being arranged inside a corresponding interior pipe of the plurality of interior pipes; and
a plurality of support part sliding means for sliding a corresponding support part of the plurality of support parts, each of the plurality of support part sliding means being connected to the corresponding support part of the plurality of support parts,
wherein the plurality of interior pipes are arranged in a nested structure, and in the plurality of interior pipes, the tapered part and the impact absorbing part which are similar to those formed in the exterior pipe are formed at an inner wall of each of the plurality of interior pipes having another interior pipe inside.

The impact absorbing device of the present invention according to the embodiment may further comprise one or a plurality of lock mechanisms, the one or plurality of lock mechanisms locking the plurality of interior pipes so that the plurality of interior pipes are not released, and the one or the plurality of lock mechanisms may be arranged upon a bottom of each of the plurality of interior pipes.

In the impact absorbing device of the present invention according to the embodiment, the interior pipe sliding means may comprise an elastic body and a wire for the interior pipe, one end of the elastic body for the interior pipe may be connected to a projection direction end of the interior pipe under compression of the elastic body for the interior pipe, and the wire for the interior pipe may be connected to the interior pipe directly or via a component.

In the impact absorbing device of the present invention according to the embodiment, the component may be the lock mechanism.

In the impact absorbing device of the present invention according to the embodiment, each of the plurality of support part sliding means may comprise an elastic body and a wire for the support part respectively, one end of each of the elastic bodies for the support part may be connected to a corresponding support part of the plurality of support parts under compression of each of the elastic bodies for the support part and another end of each of the elastic bodies for the support part may be connected a bottom of a corresponding interior pipe of the plurality of interior pipes, and each of the wires for the support part may be connected to a corresponding support part of the plurality of support parts and serves as the wire for the interior pipe.

In the impact absorbing device of the present invention according to the embodiment, either at least one of the elastic body for the interior pipe or the elastic body for the support part may be a spring.

The impact absorbing device of the present invention according to the embodiment may further comprise a motor unit for pushing and pulling the plurality of wires for the support part, the motor unit being connected to the plurality of wires for the support part.

In the impact absorbing device of the present invention according to the embodiment, impact may be absorbed by an outer pipe of the exterior pipe and the plurality of interior pipes in descending order according to their external diameters.

In the impact absorbing device of the present invention according to the embodiment, the exterior pipe and interior pipes, which have another interior pipe on the inside, of the plurality of interior pipes may be made of materials having elastic characteristics.

The impact absorbing device of the present invention according to the embodiment, may have an odd number of movable bodies and one or a plurality of holes.

### Effects of the Invention

As described above, in the impact absorbing device of the present invention, when the impact is absorbed, the movable body can contact with the tapered part, and the movable body pushes the side wall of the exterior pipe with mechanical force not with the frictional force because the movable body does not escape in the movable body accommodation part. Thereby, the impact is transmitted to the side wall of the pipe securely. Additionally, in the impact absorbing device of the present invention, at the time of an axial movement of the interior side pipes such as storage, by the movement of the movable body to the movable body accommodation part of the support part. Therefore, the sliding of the interior pipe such as the storage is possible while this configuration is a simple configuration.

Additionally, by using a spring and a wire, the impact absorbing device of the present invention is excellent in being able to push the interior pipe instantly after an obstruction has been detected by a sensor.

### BRIEF DESCRIPTION OF THE DRAWINGS

Fig.1 is an illustration showing a behavior of a conventional impact absorbing device.
Fig.2 is a cross-sectional view showing a configuration of the conventional impact absorbing device.
Fig.3 is a partial expanded sectional view of Fig.2.
Fig.4 is a partial expanded sectional view of Fig.2.
Fig.5 is a schematic view showing the impact absorbing device of one embodiment of the invention.
Fig.6 is a sectional view showing a behavior condition of a support part of the impact absorbing device of the above embodiment.
Fig.7 is a sectional view showing a behavior condition of the support part of the impact absorbing device of the above embodiment.
Fig.8 is a sectional view showing the condition of an interior pipe which is pulled inside of the impact absorbing device of the above embodiment.
Fig.9 is a sectional view showing the condition of the interior pipe which is pulled inside of the impact absorbing device of the above embodiment.
Fig.10 is an A-A direction cross-sectional view of Fig.9.
Fig.11 is a cross-sectional view showing a storage condition of the interior pipe of the impact absorbing device of the above embodiment.
Fig.12 is a cross-sectional view showing the condition at the time of impact absorption of the impact absorbing device of the above embodiment.
Fig.13 is a side-view showing an automobile attached with the impact absorbing device of the above embodiment.
Fig.14 is a top-view showing the automobile attached with the impact absorbing device of the above embodiment.
Fig.15 is a cross-sectional view showing a configuration of the impact absorbing device of another embodiment of the invention.
Fig.16 is a cross-sectional view showing a configuration of the impact absorbing device of another embodiment of the present invention.
Fig.17 is a cross-sectional view showing a configuration of the impact absorbing device of another embodiment of the present invention.
Fig.18 is a cross-sectional view showing a configuration of the impact absorbing device of another embodiment of the present invention.
Fig.19 is a cross-sectional view showing the condition of an interior pipe which is pulled inside of the impact absorbing device of another embodiment of the present invention.
Fig.20 is a cross-sectional view showing the condition at the time of impact absorption of the impact absorbing device of the above embodiment shown in Fig.19.
Fig.21 is a B-B direction cross-sectional view of Fig.20.

### DESCRIPTION OF THE REFERENCE NUMERALS

- 1:: impact absorbing device
- 2:: motor unit
- 3:: controller
- 4:: sensor
- 5:: hinge
- 11:: exterior pipe
- 12:: interior pipe
- 12a:: interior pipe
- 12b:: interior pipe
- 13:: support part
- 13a:: support part
- 13b:: support part
- 14:: movable body
- 14a:: movable body
- 14b:: movable body
- 15:: spring
- 16a:: wire
- 16b:: wire
- 17:: spring
- 18:: pressing component
- 19:: central pipe
- 20:: lock mechanism
- 21:: motor
- 22:: gear
- 23a:: clutch
- 23b:: clutch
- 24:: motor
- 111:: tapered part
- 121:: movable body hole
- 131:: movable body accommodation part
- 161:: wire
- 162:: wire
- 191:: tapered part
- 231:: exterior pipe
- 232:: interior pipe
- 233:: impact absorbing device
- 234:: movable body
- 235:: movable body support stick
- 236:: wedge-shaped space

### BEST MODE FOR CARRYING OUT THE INVENTION

Next, descriptions are made of an embodiment of the present invention. The present invention is not limited at all by the following embodiments.

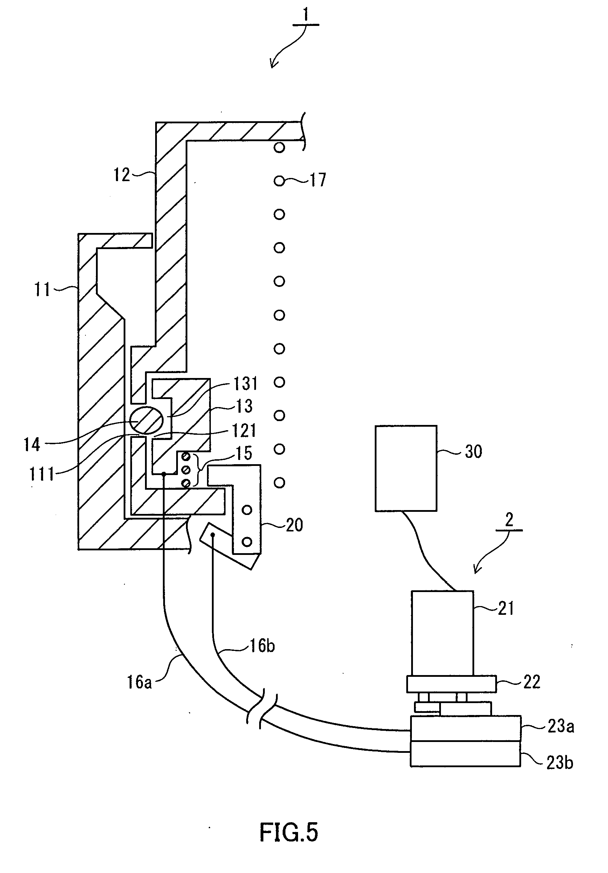

[Embodiment 1]
Based on Fig.5 to Fig.14, descriptions are made of an impact absorbing device of the present embodiment. All components in Fig.5 to Fig.14 which occur identically have the same reference numerals.

Fig.5 shows a schematic configuration of an impact absorbing device of the present embodiment. As shown in the figure, this impact absorbing device includes a main part of the impact absorbing device 1 and a motor unit 2. Although not shown, the motor unit 2 is electrically connected to a controller. The controller is electrically connected to a sensor. In the main part of the impact absorbing device, an interior pipe 12 is arranged in a condition in which it can slide axially and coaxially in an exterior pipe 11. Also, in the interior pipe 12, a support part 13 is arranged in a condition in which it can slide in an inner wall of the interior pipe. A tapered part 111 which is in the condition in which the inner wall gradually tapers off in a projection direction of the interior pipe is formed in an inner wall of the exterior pipe 11. A side wall of the interior pipe 12 has a movable body hole 121. A movable body 14 is arranged in the movable body hole 121. Also, the support part 13 has a groove-shaped movable body accommodation part 131. One end of a wire 16a is connected to the lower part of the support part 13. Between the support part 13 and the bottom of the interior pipe 12, a spring 15 is arranged. This allows the support part 13 to be biased in a projection direction (an upper direction in the drawing) of the interior pipe 12. Spring 17 is arranged inside of the interior pipe 12. One end of the spring 17 contacts with the inner surface of a top panel of the interior pipe. Another end of the spring 17 contacts with the bottom of the exterior pipe 11. The interior pipe 12 is in a condition in which it is biased in the projection direction by the spring 17. On the bottom of the interior pipe 12, a lock mechanism 20 is mounted. One end of a wire 16b is connected to the lock mechanism 20. On the other hand, wires 16a and 16b are connected to a motor unit 2 via clutches 23a and 23b respectively. A pulley and the like may be used if necessary when the wires 16a and 16b each are connected to the motor unit 2. A sensor 30 for sensing the application of an impact given to the impact absorbing device according to this embodiment may be used. A hard sphere is used for the movable body in this embodiment and, it is similar in other embodiments.

In this embodiment, STKM13C which is a carbon steel tube for machine structural purposes (STKM materials) is used for the exterior pipe 11 and the interior pipe 12. In this embodiment, a heat-treated carbon steel tube for machine structural purpose (STKM material) (i.e., a heat-treated STKM13C which is a carbon tool steel (SK materials) or an SK7) is used for the support part 13. In this embodiment, a high carbon chromium bearing steel (SUJ-2) or a SUS440C is used for the movable body 14.

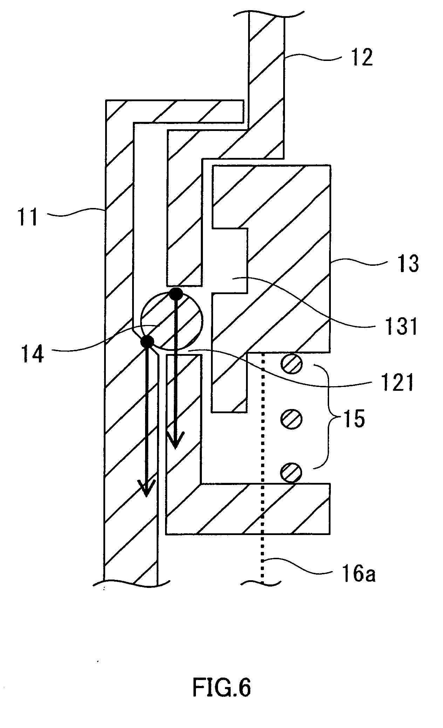

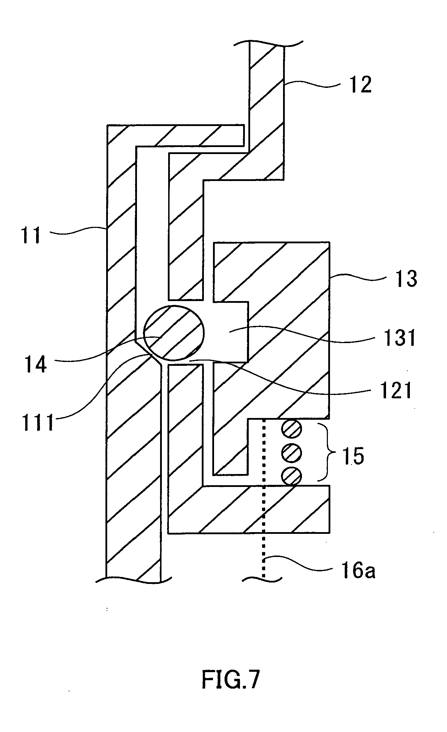

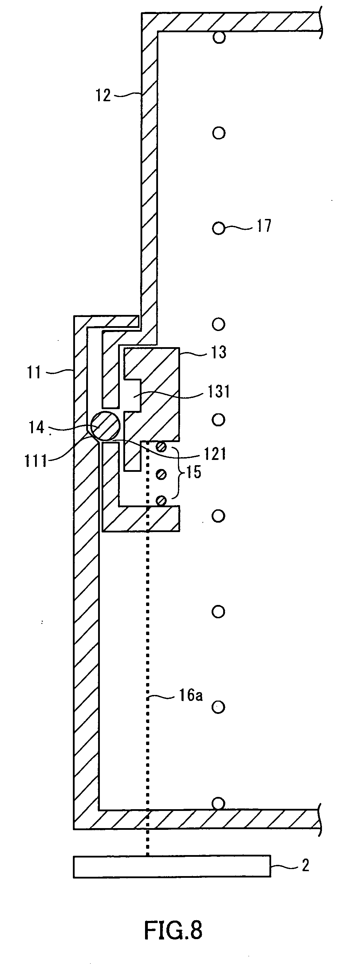

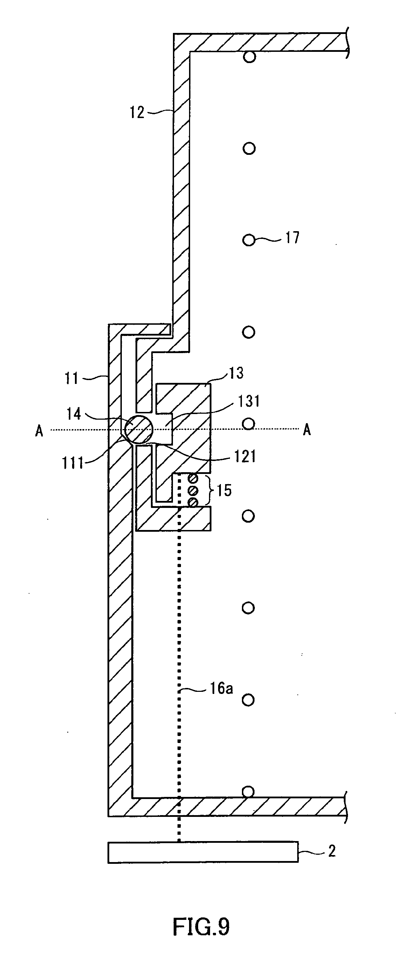

Next, a movement of the support part 13 in the impact absorbing device is described based on Fig.6 to Fig.9. As shown in Fig.6 and Fig.8, the interior pipe 12 is projected (released) by an energization power of the spring 17 during impact absorption. The support part 13 moves in an upper direction (projection direction of the interior pipe) by the energization power of the spring 15. As a result, the support part 13 except the movable body accommodation part 131 block up the inside opening of the movable body hole 121 of the interior pipe12. A portion of the movable body 14 arranged in the movable body hole 121 contacts with a tapered part 111 of the exterior pipe 11. Furthermore, the movable body 14 is unable to go into a movable body accommodation part 131 of the support part 13. This allows the movable body 14 to be pushed by the movable body hole 121 when the impact is given to the interior pipe 12. This impact force is securely transmitted via the tapered part 111 to a side wall of the exterior pipe 11. On the other hand, the wire 16a is wound by the motor unit 2 as shown in Fig.7 and Fig.9 when the impact absorption is not needed, and the projected (released) interior pipe 12 is stored in the exterior pipe 11. This allows the impact absorbing device of the present invention to move the support part 13 in a lower direction (storage direction of the interior pipe 12) putting the movable body accommodation part 131 and the movable body hole 121 in a face to face condition. In such a condition, the interior pipe 12 is pushed by the support part 13, and is moved downward and stored in the exterior pipe 11 when the impact absorbing device pulls down further the support part 13 by the wire 16a. In such an event, a part of or all of the movable body 14 arranged in the movable body hole 121 moves to the movable body accommodation part 131 of the support part 13. This prevents the movable body 14 from locking at the tapered part 111. Thus, in the impact absorbing device of this embodiment, the interior pipe 12 can be fixed during impact absorption and the interior pipe 12 can be moved during storing with the simple configuration. When a degree of impact is low or when there is no impact, the impact absorbing device can be repeatedly used by storing the interior pipe 12. Additionally, in the impact absorbing device of this embodiment, the impact absorbing part requires few parts. The impact absorbing device provides a taper closer to the interior pipe of the movable body accommodation part 131, and it may easily become the condition at the time of the impact absorption instantly.

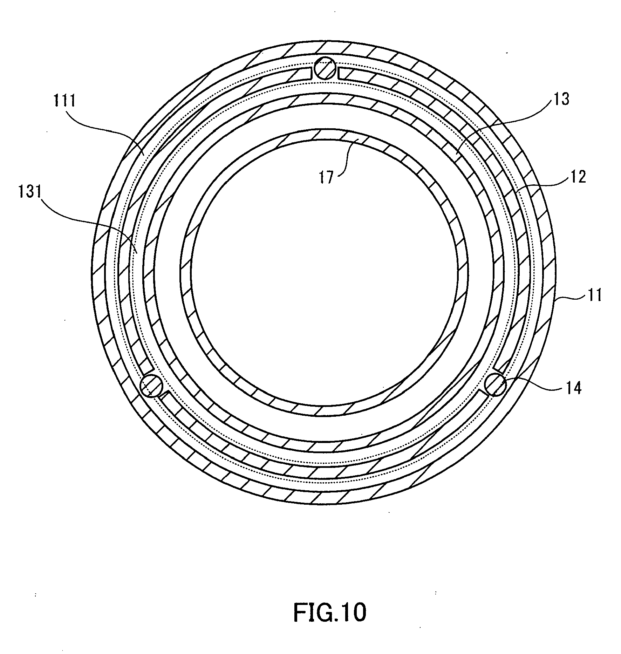

Fig.10 is a cross sectional view of an A-A direction of Fig.9. Components in Fig.10 which occur identically in Fig.9 have the same reference numerals. As shown in the drawing, in the impact absorbing device of this embodiment, three pieces of the movable body hole 121 are formed in a circumferential direction on the interior pipe 12's side wall with an equivalent interval. The movable body 14 is arranged in each of the movable body holes 121 respectively. The movable body accommodation part 131 of the support part 13 is groove-shaped and circularly formed on the side of an external wall of the support part 13.

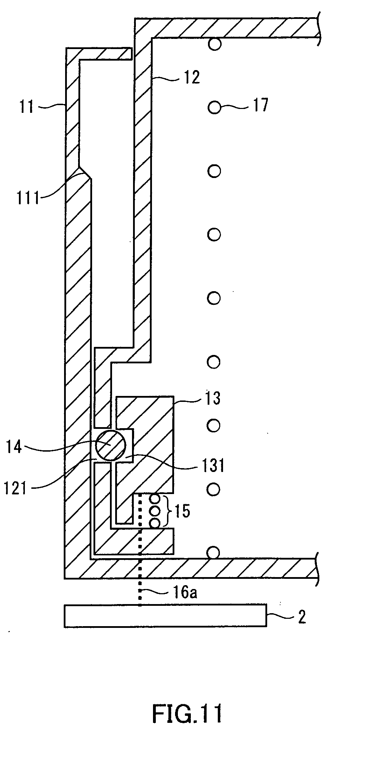

Next, Fig.11 shows the cross sectional view of the interior pipe 12 which is stored in the impact absorbing device of this embodiment. As shown in the drawing, the interior pipe 12 is stored inside of the exterior pipe 11 by the wire 16a being wound off by the motor unit 2. When the interior pipe 12 is stored, the spring 17 is compressed. Thus, in the impact absorbing device, an energization power acts on the interior pipe 12 in a projection direction. Although not shown, the lock mechanism 20 is attached to the bottom of the interior pipe 12. Thus, the interior pipe 12 is not projected (released) in the case where the motor unit 2 is turned off. The spring 15 is also compressed. Therefore, in the support part 13, the energization power acts in a projection direction of the interior pipe 12. The movable body arranged in the movable body hole 121 of the interior pipe 12 is in the condition that a part of the movable body is stored in the movable body accommodation part 131 of the support part 13. In the case where the impact is predicted and the interior pipe is projected (released), the impact absorbing device releases a lock of the lock mechanism 20 (not shown) by the wire 16b (not shown) by driving the motor units 2. Therefore, the interior pipe 12 is projected (released) by the energization power of the spring 17, and the support part 13 moves upwards by the energization power of the spring 15 and blocks up an inner side opening of the movable body hole 121. Thereby, the impact absorbing device of the present invention is in the condition as shown in Fig.6 and Fig.8. Therefore, the impact absorbing device can address the impact absorption.

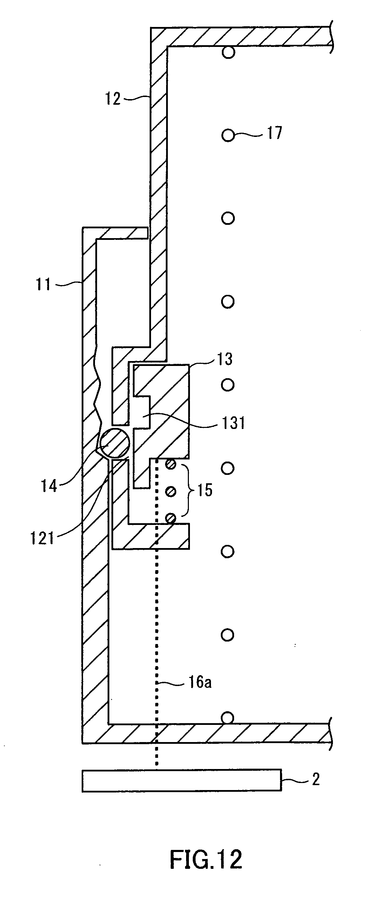

Next, when the impact is actually applied to the interior pipe 12, the interior pipe pushes the tapered part 111 of the exterior pipe 11 via the movable body 14, as shown in Fig. 12. When an impact force is strong, the interior pipe 12 is stored while deforming a side wall of the exterior pipe 11. This may allow the impact to be absorbed. In the impact absorbing device of this embodiment, the impact can be securely transmitted to the exterior pipe 11, not by frictional force, but by the movable body 14 pushing and deforming a side wall of the exterior pipe 11. In addition, the exterior pipe 11 may also be deformed itself. When the exterior pipe 11 is deformed itself, the deformation of the exterior pipe 11 itself contributes to energy absorption.

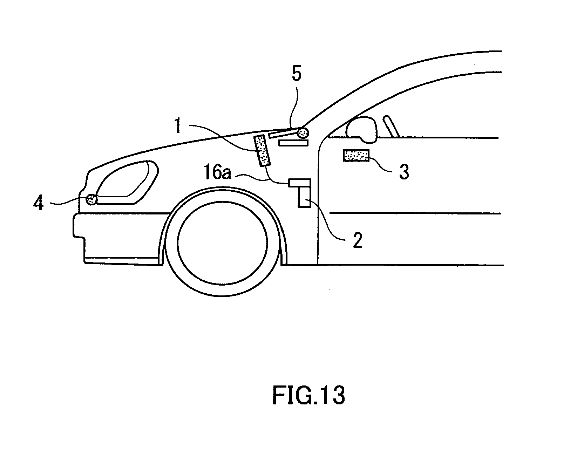

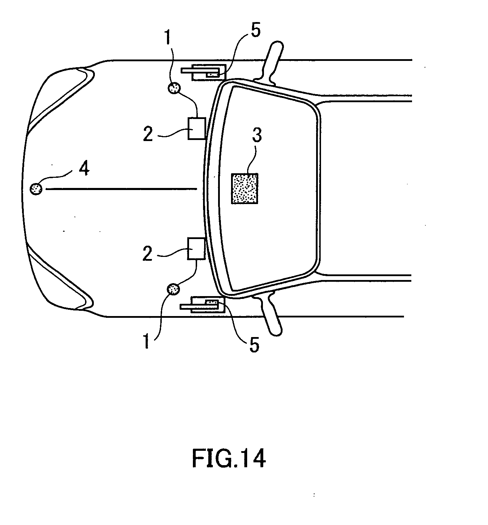

Figs.13 and 14 show a schematic view of two of the impact absorbing devices of this embodiment attached to an automobile hood. Fig.13 is a view seen from one side of the automobile. Fig.14 is a view seen from an upper side of the automobile. As shown in the Figures, the main part of the impact absorbing device 1 is attached to each side of the automobile hood. Each main part of the impact absorbing device 1 is connected to motor units 2 through a wire. A tip of an interior pipe of each main part of the impact absorbing device 1 is attached to the back face of the hood. Two of the motor units 2 are placed under an engaging part between the hood and the engine compartment. Inside a front panel of the driver's seat, one controller 3 is arranged. The controller 3 is electrically connected to two of the motor units 2. A sensor 4 is placed inside a front grill of the automobile,. The sensor 4 is electrically connected to the controller 3. In Fig.13 and Fig.14, a hinge of the hood is designated at 5. In the main part of the impact absorbing device 1 shown in Fig.13 and Fig.14, the interior pipe is usually stored in the exterior pipe. On the other hand, the motor unit 2 is driven by an electrical signal from the controller 3 when the impact is predicted by the sensor 4. Then, the lock mechanism of each of the main parts of the impact absorbing device 1 is released. Thereby, the interior pipe is projected (released) by the energization force of a spring. As a result, the hood is loosened. And when the impact is applied to the hood, the main part of the impact absorbing device 1 absorbs the impact securely as described above. However, when the impact is not applied, or even if the impact is applied, in that case it is such a small impact that there is no failure of the exterior pipe. Therefore, the impact absorbing device drives the motor units 2 by an electrical signal from the controller 3, and winds a wire. Hereby, in the impact absorbing device, the interior pipe is stored in the exterior pipe as described in the above. As a result, the impact absorbing device can be repeatedly used in this way.

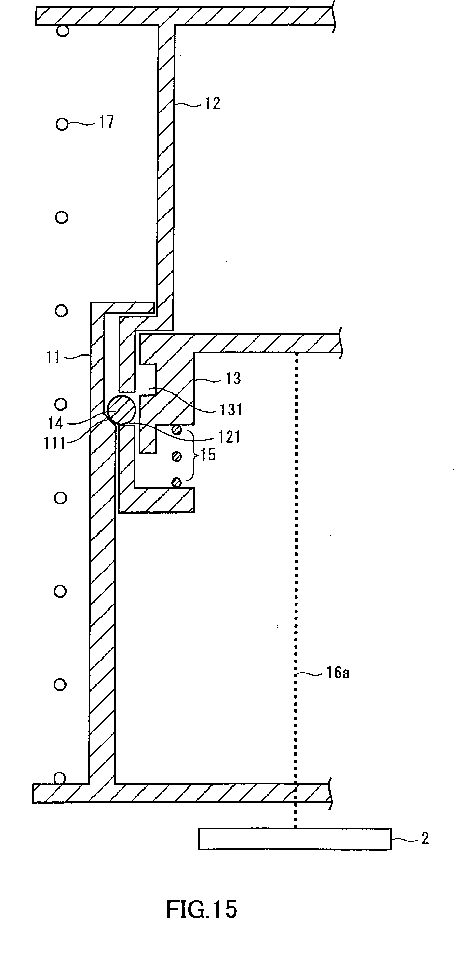

Embodiment 2
Fig.15 shows another example of a cross sectional view of an impact absorbing device. Components in Fig.15 which occur identically in Fig.5 to Fig.14 have the same reference numerals. As shown in Fig.15, a disk-shaped projection (a flange) is installed outside of a tip of the interior pipe 12 in the impact absorbing device. Together with this, spring 17 is arranged on the outside of the exterior pipe. Furthermore, one end of spring 17 is attached to the disk-shaped projection of the interior pipe 12. In the impact absorbing device of this example, one end of a wire 16a is attached to a center part of the support part 13. By making the configuration as described above, in the impact absorbing device, the support part 13 can be pulled in a balanced manner when the support part 13 is pulled with the wire 16a to store the interior pipe 12 in the exterior pipe 11. As a result, the impact absorbing device can store the interior pipe 12 smoothly.

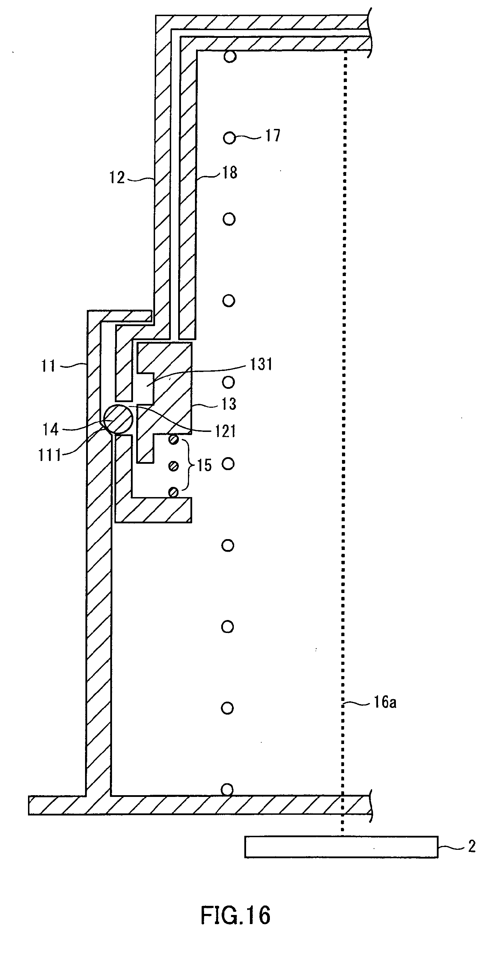

Embodiment 3
Fig.16 shows a cross sectional view of another impact absorbing device. Components in Fig.16 which occur identically in Fig.5 to Fig.15 have the same reference numerals. As shown in Fig.16, one end of the wire 16a is attached to a pressing component 18 in this impact absorbing device. Through the pressing component 18, the support part 13 is pulled with the wire 16a. One end of the spring 17 is attached to the pressing component 18. The interior pipe 12 receives energization power from the spring 17 through the pressing component 18. With such a configuration, the impact absorbing device can push the support part 13 equally. As a result, the impact absorbing device can store the interior pipe 12 smoothly.

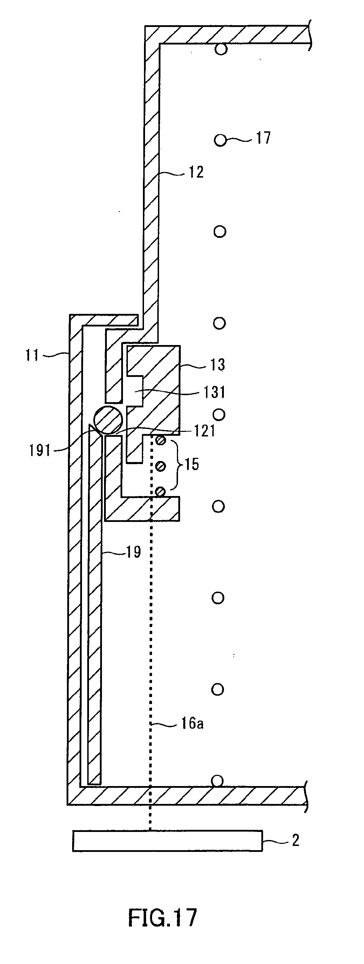

Embodiment 4
Fig.17 shows a cross sectional view of another impact absorbing device. Components in Fig.17 which occur identically in Fig.5 to Fig.16 have the same reference numerals. In the impact absorbing device as shown in Fig.17, instead of a tapered part of the exterior pipe 11, a central pipe is arranged which has a tip opening edge having a tapered part 191 which tapers off in the direction of the opening. The central pipe 19 is arranged between the exterior pipe 11 and the interior pipe 12. During the impact absorption, the movable body 14 is arranged in the movable body hole 121 of the interior pipe 12 so that the movable body 14 can contact with the tapered part 191. With such a configuration the structure of the main part of impact absorbing device is simpler. As a result, this may improve manufacturing efficiency and result in a reduction of costs.

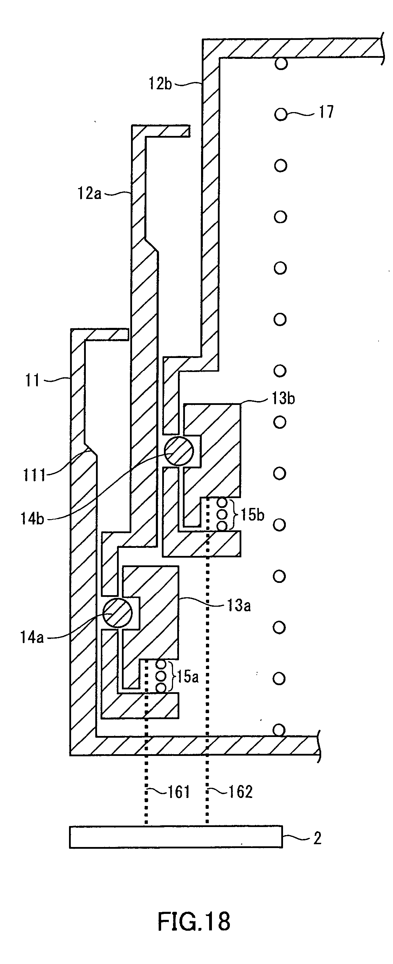

Embodiment 5
Fig.18 shows a cross sectional view of an impact absorbing device of another example. Components in Fig.18 which occur identically in Fig.5 to Fig.17 have the same reference numerals. As shown in Fig.18, this impact absorbing device has the interior pipes 12a and 12b having a different external diameter and a different internal diameter from each other. The interior pipe 12b having a small diameter is nested inside the interior pipe 12a having a large diameter,. In the interior pipes 12a and 12b, the tapered part which is similar to that formed above the exterior pipe is formed in an inner wall of the interior pipe having the large diameter. A support part 13a is arranged in the interior pipe 12a having the large diameter. The support part 13a is biased by a spring 15a. Furthermore, one end of a wire 161 is attached to the lower part of the support part 13a. A support part 13b is arranged in the interior pipe 12b having the small diameter. The support part 13b is biased by a spring 15b. Furthermore, one end of a wire 162 is attached to the lower part of the support part 13b. The two wires 161 and 162 are connected to the motor unit 2 respectively. Thus, the impact absorbing device can realize a long stroke if the configuration of the interior pipes is made a multistep of more than two steps. As a result, the impact absorbing device has a superior impact absorbing capacity.

In the impact absorbing device, materials, hardness and thickness of each exterior pipe, a diameter of the pipe, a touch area between the pipe and the movable body (a hard sphere) and the like may be adjusted in order to absorb impacts in order of pipes having a larger diameter among the plurality of exterior pipes.

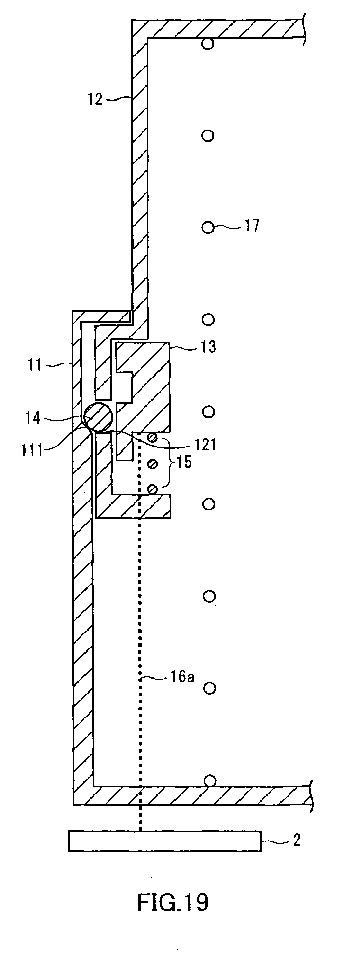

Embodiment 6
Fig.19 shows a cross sectional view of an impact absorbing device of another example. Components in Fig.19 which occur identically in Fig.5 have the same reference numerals. The impact absorbing device according to the present embodiment is used under an elastic deformation of the exterior pipe conditions.

In this embodiment, a heat-treated STKM13C is used for the exterior pipe 11. Although STKM13C is used for the exterior pipe 11 in this embodiment, the present invention is not limited to this, and other carbon steel tubes for machine structural purposes (STKM materials) or a heat-treated SUP10 material and the like which have elastic characteristics may be used for the exterior pipe 11. Furthermore, resin and the like having elastic characteristics may be used for the exterior pipe. In this embodiment, the materials used in the above first embodiment are used for the interior pipe 12, the support part 13 and the movable body 14 under the elastic deformation of the exterior pipe 11 conditions (in other words, within a scope that the exterior pipe is not deformed plastically).

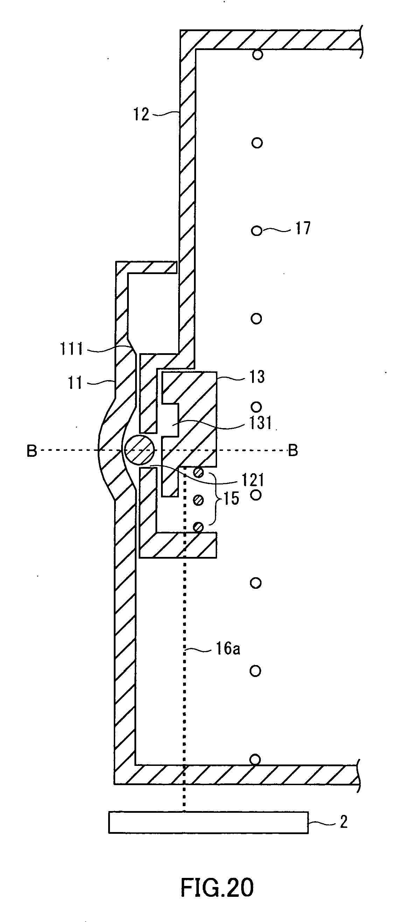

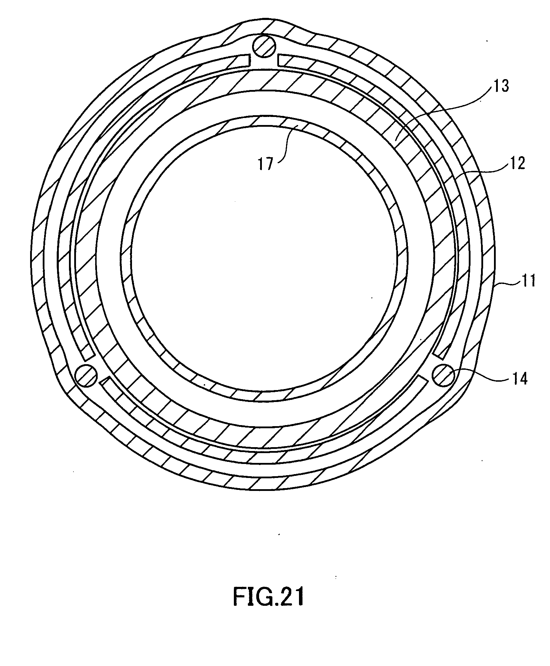

Fig.20 shows the condition of impact absorption by the impact absorbing device of this embodiment. Fig.21 shows a B-B direction cross-sectional view of Fig.20. When the impact is applied to the impact absorbing device of this embodiment, as shown in Figs.20 and 21, the interior pipe 12 pushes the tapered part 111 of the exterior pipe 11 through the movable body 14. When a strong impact is applied to the tapered part 111 of the exterior pipe 11, the interior pipe 12 pushes the inner wall of the exterior pipe 11 through the movable body 14, thus the exterior pipe 11 is deformed elastically. By deforming the exterior pipe 11 itself elastically, the interior pipe 12 is stored in the direction in which the impact is applied. Therefore, the applied impact is absorbed.

In the impact absorbing device according to this embodiment, materials which have elastic characteristics are used for the exterior pipe 11 as described above. Therefore, when the exterior pipe is deformed elastically in the impact absorption, the support part 13 is moved in a lower direction by winding the wire 16a with the motor unit 2, and the movable body accommodation part 131 of the support part 13 and the movable body hole 121 of the interior pipe 12 are placed in a face to face condition. In this condition, by retracting a part or the whole of movable body 14 in the movable body accommodation part, the exterior pipe 11 which is deformed elastically is restored to its former state.

Accordingly, even if the exterior pipe 11 is deformed in the impact absorption, the impact absorbing device according to this embodiment can restore the exterior pipe which is elastically deformed to its former state by storing the movable body 14 in the movable body accommodation part 131 of the support part 13. Therefore, the impact absorbing device according to this embodiment can be used repeatedly as an impact absorbing device even if it only absorbs an applied impact after being used once.

In the impact absorbing device according to this embodiment, materials having elastic characteristics are used only for the exterior pipe. However, the present invention is not limited to this, materials having elastic characteristics may also be used for the central pipe, interior pipe and so on.

In addition, the impact absorbing device of the present invention according to all embodiments has an odd number of movable bodies and movable body holes preferably. For example, there are three, five, seven, nine, eleven, and thirteen etc. However, the present invention is not limited to these.

In the impact absorbing device of the present invention, the movable body accommodation part of the support part may be a groove formed in the support part.

In the impact absorbing device of the present invention, a peripheral part of the movable body holes of the interior pipe may be formed of a material which is harder than a material used for the exterior pipe or the central pipe.

In the impact absorbing device of the present invention, the movable body is preferably a hard sphere. However, the present invention is not limited to this. Additionally, it is preferable for the shape of the movable body to be a globe. However, the present invention is not limited to this. For example, the shape of the movable body may be a pillar shape, a rugby ball shape, or a triangle and so on.

### INDUSTRIALAPPLICABILITY

As described above, the impact absorbing device according to the present invention can absorb applied impacts securely with a simple configuration and can be easily recycled. For example, the impact absorbing device of the present invention is used for an automobile bumper or a hood. However, the present invention is not limited to this. The present invention can be widely applied to various fields such as electric railcar, airplane and so on.

## Claims

1. An impact absorbing device comprising:
an exterior pipe having an inner wall and further having a tapered part and an impact absorption part arranged at a part of said inner wall for absorbing exterior impacts, said exterior pipe being connected to external components;
an interior pipe having one or a plurality of holes, said interior pipe being coaxially arranged inside said exterior pipe, said interior pipe being capable of sliding axially along inside said exterior pipe and being capable of projecting from said exterior pipe;
an interior pipe sliding means for sliding said interior pipe, said interior pipe sliding means being connected to said interior pipe and a bottom of said exterior pipe;
one or a plurality of movable bodies arranged in said one or plurality of holes of said interior pipe respectively, said one or plurality of movable bodies being rigid spheres;
a support part having one or a plurality of movable body accommodation parts for accommodating said one or plurality of movable bodies respectively, said support part being arranged inside said interior pipe; and
a support part sliding means for sliding said support part, said support part sliding means being connected to said support part.

2. The impact absorbing device according to claim 1 further comprising:
a lock mechanism, said lock mechanism locking said interior pipe so that said interior pipe is not released, said lock mechanism being arranged upon a bottom of said interior pipe.

3. The impact absorbing device according to claim 1, wherein said interior pipe sliding means comprises an elastic body and a wire for said interior pipe, one end of said elastic body for said interior pipe is connected to a projection direction end of said interior pipe under compression of said elastic body for said interior pipe, and said wire for said interior pipe is connected to said interior pipe directly or via a component.

4. The impact absorbing device according to claim 3, wherein said component is said lock mechanism.

5. The impact absorbing device according to claim 1, wherein said sliding means comprises an elastic body and a wire for said support part, one end of said elastic body for said support part is connected to said support part under compression of said elastic body for said support part, and said wire for said support part is connected to said support part and serves as said wire for said interior pipe.

6. The impact absorbing device according to claim 5, wherein either at least one of said elastic body for said inside pipe or said elastic body for said support part is a spring.

7. The impact absorbing device according to claim 5, further comprise a motor unit for pushing and pulling said wire for said support part, said motor unit being connected to said wire for said support part.

8. The impact absorbing device according to claim 6, wherein said elastic body for said interior pipe and said elastic body for said support part is arranged inside said interior pipe.

9. The impact absorbing device according to claim 1, wherein said exterior pipe is made of materials having elastic characteristics.

10. The impact absorbing device according to claim 1, wherein there are an odd number of movable bodies and holes.

11. The impact absorbing device according to claim 1, wherein said interior pipe has a disk-shaped projection facing outwards in an upper end of said interior pipe, said exterior pipe has a disk-shaped projection facing outwards in a bottom end of said exterior pipe, and said support part has a disk-shaped projection facing inwards in an upper end of said support part.

12. The impact absorbing device according to claim 11, wherein said elastic body for said interior pipe is arranged outside said exterior pipe.

13. The impact absorbing device according to claim 11, wherein said exterior pipe is made of materials having elastic characteristics.

14. The impact absorbing device according to claim 11, wherein there are an odd number of movable bodies and holes.

15. An impact absorbing device comprising:
an exterior pipe having an inner wall and further having a tapered part and an impact absorption part arranged at a part of said inner wall for absorbing exterior impacts, said exterior pipe being connected to external components;
an interior pipe having one or a plurality of holes, said interior pipe being coaxially arranged inside said exterior pipe, said interior pipe being capable of sliding axially along inside said exterior pipe and being capable of projecting from said exterior pipe;
an interior pipe sliding means for sliding said interior pipe, said interior pipe sliding means being connected to said interior pipe and a bottom of said exterior pipe;
one or a plurality of movable bodies arranged in said one or said plurality of holes of said interior pipe respectively, said one or said plurality of movable bodies being rigid spheres;
a support part having one or a plurality of movable body accommodation parts for accommodating said one or said plurality of movable bodies respectively, said support part being arranged inside said interior pipe;
a pressing component for pushing and sliding said support part, said pressing component being arranged inside said interior pipe; and
a support part sliding means for sliding said support part, said support part sliding means being connected to said support part.

16. The impact absorbing device according to claim 15 further comprising:
a lock mechanism, said lock mechanism locking said interior pipe so that said interior pipe is not released, said lock mechanism being arranged upon a bottom of said interior pipe.

17. The impact absorbing device according to claim 15, wherein said interior pipe sliding means comprises an elastic body and a wire for said interior pipe, one end of said elastic body for said interior pipe is connected to a projection direction end of said interior pipe under compression of said elastic body for said interior pipe, and said wire for said interior pipe is connected to said interior pipe directly or via a component.

18. The impact absorbing device according to claim 17, wherein said component is said lock mechanism.

19. The impact absorbing device according to claim 15, wherein said support part sliding means comprises an elastic body and a wire for said support part, one end of said elastic body for said support part is connected to said support part under compression of said elastic body for said support part, and said wire for said support part is connected to said support part and serves as said wire for said interior pipe.

20. The impact absorbing device according to claim 19, wherein said wire for said support part moves said support part through said pressing component.

21. The impact absorbing device according to claim 19, wherein either at least one of said elastic body for said interior pipe or said elastic body for said support part is a spring.

22. The impact absorbing device according to claim 19 further comprising:
a motor unit for pushing and pulling said wire for said support part, said motor unit being connected to said wire for said support part.

23. The impact absorbing device according to claim 15, wherein said exterior pipe is made of materials having elastic characteristics.

24. The impact absorbing device according to claim 15, wherein there are an odd number of movable bodies and holes.

25. An impact absorbing device comprising:
an exterior pipe connected to external components;
an interior pipe having one or a plurality of holes, said interior pipe being coaxially arranged inside said exterior pipe, said interior pipe being capable of sliding axially along inside said exterior pipe and being capable of projecting from said exterior pipe;
an interior pipe sliding means for sliding said interior pipe, said interior pipe sliding means being connected to said interior pipe and a bottom of said exterior pipe;
a central pipe having an inner wall and further having a tapered part, said tip of said tapered part having an opening edge being formed so that it tapers off towards a direction of an opening, and an impact absorbing part for absorbing external impacts arranged at a part of said inner wall, said central pipe being arranged between said exterior pipe and said interior pipe;
one or a plurality of movable bodies arranged in said one or said plurality of holes of said interior pipe respectively, said one or said plurality of movable bodies being rigid spheres;
a support part having one or a plurality of movable body accommodation parts for accommodating said one or said plurality of movable bodies respectively, said support part being arranged inside said interior pipe; and
a support part sliding means for sliding said support part, said support part sliding means being connected to said support part.

26. The impact absorbing device according to claim 25 further comprising:
a lock mechanism, said lock mechanism locking said interior pipe so that said interior pipe is not released, said lock mechanism being arranged upon a bottom of said interior pipe.

27. The impact absorbing device according to claim 25, wherein said interior pipe sliding means comprises an elastic body and a wire for said interior pipe, one end of said elastic body for said inside pipe is connected to a projection direction end of said interior pipe under compression of said elastic body for said interior pipe, and said wire for said interior pipe is connected to said interior pipe directly or via a component.

28. The impact absorbing device according to claim 27, wherein said component is said lock mechanism.

29. The impact absorbing device according to claim 25, wherein said support part sliding means comprises an elastic body and a wire for said support part, one end of said elastic body for said support part is connected to said support part under compression of said elastic body for said support part, and said wire for said support part is connected to said support part and serves as said wire for said interior pipe.

30. The impact absorbing device according to claim 29, wherein either at least one of said elastic body for said interior pipe or said elastic body for said support part is a spring.

31. The impact absorbing device according to claim 29 further comprising:
a motor unit for pushing and pulling said wire for said support part, said motor unit being connected to said wire for said support part.

32. The impact absorbing device according to claim 25, wherein said central pipe is made of materials having elastic characteristics.

33. The impact absorbing device according to claim 25, wherein there are an odd number of movable bodies and holes.

34. An impact absorbing device comprising:
an exterior pipe having an inner wall and further having a tapered part and an impact absorption part arranged at a part of said inner wall for absorbing external impacts, said exterior pipe being connected to external components;
a plurality of interior pipes having one or a plurality of holes respectively, said plurality of interior pipes being coaxially arranged inside said exterior pipe, said plurality of interior pipes having a different external diameter and a different internal diameter respectively, and said plurality of interior pipes being capable of sliding axially along inside said exterior pipe and being capable of projecting from said exterior pipe;
an interior pipe sliding means for sliding said plurality of interior pipes, said interior pipe sliding means being connected to said interior pipe arranged innermost and a bottom of said exterior pipe;
a plurality of movable bodies arranged in said one or said plurality of holes of said interior pipe respectively, said plurality of movable bodies being rigid spheres;
a plurality of support parts having one or a plurality of movable body accommodation parts for accommodating a corresponding movable body of said plurality of movable bodies respectively, each of said plurality of support parts being arranged inside a corresponding interior pipe of said plurality of interior pipes; and
a plurality of support part sliding means for sliding a corresponding support part of said plurality of support parts, each of said plurality of support part sliding means being connected to said corresponding support part of said plurality of support parts,
wherein said plurality of interior pipes are arranged in a nested structure, and in said plurality of interior pipes, said tapered part and said impact absorbing part which are similar to those formed in said exterior pipe are formed at an inner wall of each of said plurality of interior pipes having another interior pipe inside.

35. The impact absorbing device according to claim 34 further comprising:
one or a plurality of lock mechanisms, said one or plurality of lock mechanisms locking said plurality of interior pipes so that said plurality of interior pipes are not released, said one or said plurality of lock mechanisms being arranged upon a bottom of each of said plurality of interior pipes.

36. The impact absorbing device according to claim 34, wherein said interior pipe sliding means comprises an elastic body and a wire for said interior pipe, one end of said elastic body for said interior pipe is connected to a projection direction end of said interior pipe under compression of said elastic body for said interior pipe, and said wire for said interior pipe is connected to said interior pipe directly or via a component.

37. The impact absorbing device according to claim 36, wherein said component is said lock mechanism.

38. The impact absorbing device according to claim 34, wherein each of said plurality of support part sliding means comprises an elastic body and a wire for said support part respectively, one end of each of said elastic bodies for said support part is connected to a corresponding support part of said plurality of support parts under compression of each of said elastic bodies for said support part and another end of each of said elastic bodies for said support part is connected a bottom of a corresponding interior pipe of said plurality of interior pipes, and each of said wires for said support part is connected to a corresponding support part of said plurality of support parts and serves as said wire for said interior pipe.

39. The impact absorbing device according to claim 38, wherein either at least one of said elastic body for said interior pipe or said elastic body for said support part is a spring.

40. The impact absorbing device according to claim 38 further comprising;
a motor unit for pushing and pulling said plurality of wires for said support part, said motor unit being connected to said plurality of wires for said support part.

41. The impact absorbing device according to claim 34, wherein impact is absorbed by an outer pipe of said exterior pipe and said plurality of interior pipes in descending order of their external diameters.

42. The impact absorbing device according to claim 34, wherein said exterior pipe and interior pipes, which have another interior pipe on said inside, of said plurality of interior pipes are made of materials having elastic characteristics.

43. The impact absorbing device according to claim 34, wherein there are an odd number of movable bodies and holes.
